# EUROPÄISCHE PATENTSCHRIFT

(11) **EP 3 382 251 B1**
(45) Veröffentlichungstag und Bekanntmachung des Hinweises auf die Patenterteilung: **01.07.2020**
(21) Anmeldenummer: 18162695.3
(22) Anmeldetag: 20.03.2018
(51) Int. Cl.: F16L 11/11, F16L 11/12, F01N 13/08, F01N 13/16, F02M 35/10

(54) **FLUIDSCHLAUCH MIT EINEM UMLAUFENDEN VERDICKUNGSWULST**
FLUID HOSE WITH A CIRCUMFERENTIAL THICKENING BEAD
TUYAU FLUIDIQUE POURVU D'UN BOURRELET D'ÉPAISSISSEMENT ENTOURANT

(30) Priorität: 30.03.2017 DE 102017106876
(43) Veröffentlichungstag der Anmeldung: 03.10.2018
(73) Patentinhaber: VERITAS AG, 63571 Gelnhausen (DE)
(72) Erfinder: KNOPP, Matthias, 63486 Bruchköbel (DE); WERTH, Josef, 63571 Gelnhausen (DE); KELLER, Uwe, 63571 Gelnhausen (DE); FINK, Hans-Joachim, 61130 Nidderau (DE)
(74) Vertreter: Patentship Patentanwaltsgesellschaft mbH

(56) Entgegenhaltungen:
- EP-A2- 0 385 268
- DE-A1- 1 808 271
- FR-A1- 2 878 603

## Beschreibung

Die vorliegende Erfindung betrifft einen Fluidschlauch zum Leiten eines Fluids mit einem umlaufenden Verdickungswulst, insbesondere eine Ladeluftleitung zum Leiten von Ladeluft oder eine Abgasrückführungsleitung zum Leiten von Abgas mit einem umlaufenden Verdickungswulst.

In einem Kraftfahrzeug wird eine Vielzahl von Fluidschläuchen verwendet, um Gase, wie z.B. Luft, oder Flüssigkeiten zu transportieren. Beim Betrieb eines Verbrennungsmotors in einem Kraftfahrzeug werden Fluide mit hohen Temperaturen und hohem Druck durch die entsprechenden Fluidschläuche geleitet. Beim Betrieb einer Ladeluftleitung zum Leiten von Ladeluft zu einem Verbrennungsmotor oder bei einer Abgasrückführungsleitung zum Abführen von Abgasen aus einem Verbrennungsmotor muss die Ladeluftleitung oder die Abgasrückführungsleitung beispielsweise einer Temperatur von mehr als 230 °C und einem Druck von mehr als 4 bar standhalten. In einem Kraftfahrzeug verwendete Fluidschläuche müssen somit einem hohen Druck und hohen Temperaturen widerstehen, hohen dynamischen Belastungen standhalten, eine hohe Lebensdauer aufweisen, sowie kostengünstig und reproduzierbar herstellbar sein.

Die EP 0 385 268 A2 beschreibt einen Schlauch zur Führung von medizinischen Flüssigkeiten.

Die DE 1 808 271 A1 beschreibt Kunstharzfolien oder Schläuche, insbesondere für Verpackungszwecke und zum Schutz von Gegenständen.

Die FR 2 878 603 beschreibt eine Luft-führende Leitung für Fahrzeugmotoren.

Es ist die der Erfindung zugrundeliegende Aufgabe, einen Fluidschlauch für ein Kraftfahrzeug bereitzustellen, welcher vorteilhafte mechanische Eigenschaften aufweist.

Diese Aufgabe wird durch Gegenstände mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch einen einstückigen Fluidschlauch zum Leiten eines Fluids gelöst, mit einer Schlauchwandung, welche zumindest einen umlaufenden Verdickungswulst aufweist, um eine Dehnsteifigkeit des Fluidschlauchs zu erhöhen.

Dadurch wird beispielsweise der technische Vorteil erreicht, dass ein mechanisch stabiler Fluidschlauch zum Leiten von Fluid bereitgestellt wird, welcher kostengünstig und reproduzierbar hergestellt werden kann. Der Fluidschlauch weist einen oder mehrere umlaufende Verdickungswulste auf, welche die Dehnsteifigkeit des Fluidschlauchs erhöhen. Bei herkömmlich verwendeten Fluidschläuchen, insbesondere Ladeluftleitungen und/oder Abgasrückführungsleitungen, kann es bei der Verwendung von bestimmten Motoren von Kraftfahrzeugen bei bestimmten Betriebssituation zu starken Druckschwankungen in den Fluidschläuchen kommen. Insbesondere kann in dem Fluidschlauch temporär ein Unterdruck auftreten, wodurch der Fluidschlauch unter Umständen temporär kollabieren kann und es zu einem temporären Systemausfall kommen kann.

Der an einer Innenseite und/oder Außenseite der Schlauchwandung des Fluidschlauchs gemäß der vorliegenden Offenbarung geformte umlaufende Verdickungswulst stabilisiert den Fluidschlauch bei auftretenden Druckschwankungen und kann beim Auftreten eines Unterdrucks in dem Fluidschlauch verhindern, dass der Fluidschlauch kollabiert. Der umlaufende Verdickungswulst ist hierbei als eine Erhöhung, bzw. Verdickung, der Schlauchwandung des Fluidschlauchs gebildet, wodurch die Dicke der Schlauchwandung an der Stelle, an der der umlaufende Verdickungswulst angeordnet ist, vergrößert wird.

Ein an einer Innenseite der Schlauchwandung des Fluidschlauchs geformter umlaufender Verdickungswulst kann darüber hinaus noch ausgebildet sein, in dem Fluidschlauch geleitetes Fluid besonders vorteilhaft, insbesondere mit einem reduzierten Strömungswiderstand, zu leiten. Hierbei kann der zumindest eine umlaufende Verdickungswulst einen einzigen umlaufenden Verdickungswulst oder eine Vielzahl von umlaufenden Verdickungswulsten umfassen.

Durch die einstückige Ausgestaltung des Fluidschlauchs ist die Schlauchwandung einstückig mit dem umlaufenden Verdickungswulst gebildet, wodurch sichergestellt wird, dass sich der umlaufende Verdickungswulst nicht von der Schlauchwandung löst.

In einer vorteilhaften Ausführungsform ist der umlaufende Verdickungswulst ringförmig oder Helix-förmig gebildet.

Dadurch wird beispielsweise der technische Vorteil erreicht, dass eine besonders wirksame Dehnsteifigkeit des Fluidschlauchs sichergestellt wird. Ein Helix-förmiger Verdickungswulst erstreckt sich über einen ausgedehnten Bereich der Schlauchwandung und kann dadurch in dem ausgedehnten Bereich eine besonders gleichmäßige Stabilisierung der Schlauchwandung sicherstellen. Ein ringförmig umlaufender Verdickungswulst stellt eine wirksame lokale Stabilisierung der Schlauchwandung sicher. Wird eine Vielzahl von ringförmig umlaufenden Verdickungswulsten nebeneinander an der Schlauchwandung angeordnet, kann eine besonders wirksame Stabilisierung über einen ausgedehnten Bereich der Schlauchwandung sichergestellt werden.

In einer vorteilhaften Ausführungsform ist die Schlauchwandung einstückig aus einem Kunststoff oder Polymer, insbesondere aus einem Elastomer, thermoplastischem Elastomer (TPE) und/oder thermoplastischen Elastomer-Vulkanisat (TPE-V) geformt.

Dadurch wird beispielsweise der technische Vorteil erreicht, dass ein Kunststoff, insbesondere Elastomer, thermoplastisches Elastomer und/oder thermoplastisches Elastomer-Vulkanisat eine besonders wirksam elastisch verformbare Schlauchwandung sicherstellt, welche zudem eine wirksame Beständigkeit gegenüber durch den Fluidschlauch geleitetem Fluid sicherstellt.

Erfindungsgemäß ist der umlaufende Verdickungswulst an einer Innenseite der Schlauchwandung geformt und ragt in einen Innenraum des Fluidschlauchs hinein. In einer vorteilhaften Ausführungsform ist der umlaufende Verdickungswulst auch an einer Außenseite der Schlauchwandung geformt und ist nach Außen gerichtet.

Dadurch wird beispielsweise der technische Vorteil erreicht, dass ein entweder an der Innenseite oder an der Außenseite der Schlauchwandung angeordneter umlaufender Verdickungswulst eine besonders wirksame Flächenstabilisierung des Fluidschlauchs sicherstellt. Alternativ kann ein umlaufender Verdickungswulst auch sowohl auf der Innenseite als auch auf der Außenseite der Schlauchwandung des Fluidschlauchs angeordnet sein.

In einer vorteilhaften Ausführungsform erstreckt sich der umlaufende Verdickungswulst von einem ersten Längsende des Fluidschlauchs zu einem gegenüberliegenden zweiten Längsende des Fluidschlauchs und umläuft der umlaufende Verdickungswulst die Schlauchwandung insbesondere mehrmals.

Dadurch wird beispielsweise der technische Vorteil erreicht, dass ein sich von dem ersten zu dem zweiten Längsende des Fluidschlauchs erstreckender umlaufender Verdickungswulst eine besonders wirksame Dehnstabilisierung über einen ausgedehnten Bereich des Fluidschlauchs sicherstellt.

In einer vorteilhaften Ausführungsform weist die Schlauchwandung eine Vielzahl von umlaufenden Verdickungswulsten auf, welche jeweils ringförmig gebildet sind, wobei die ringförmig ausgebildeten umlaufenden Verdickungswulste voneinander beabstandet an der Schlauchwandung, insbesondere an einer Innenseite der Schlauchwandung, geformt sind.

Dadurch wird beispielsweise der technische Vorteil erreicht, dass eine Vielzahl von voneinander beabstandeten an der Schlauchwandung angeordneten umlaufenden Verdickungswulsten eine besonders wirksame Dehnstabilisierung des Fluidschlauchs sicherstellen. Insbesondere kann der Abstand zwischen den einzelnen ringförmig ausgebildeten umlaufenden Verdickungswulsten konstant sein, um eine möglichst gleichmäßige Dehnstabilisierung des Fluidschlauchs über einen ausgedehnten Bereich des Fluidschlauchs zu ermöglichen. Alternativ kann insbesondere der Abstand zwischen den einzelnen ringförmig ausgebildeten umlaufenden Verdickungswulsten zumindest abschnittsweise unterschiedlich sein, um in bestimmten Bereichen des Fluidschlauchs in denen größere mechanische Belastungen auftreten können, eine besonders wirksame Dehnstabilisierung des Fluidschlauchs sicherzustellen.

In einer vorteilhaften Ausführungsform weist der Fluidschlauch eine Längsachse auf, welche sich von einem ersten Längsende des Fluidschlauchs zu einem gegenüberliegenden zweiten Längsende des Fluidschlauchs erstreckt, wobei die ringförmig ausgebildeten umlaufenden Verdickungswulste jeweils in einer Ebene angeordnet sind, wobei die jeweiligen Ebenen orthogonal und/oder schräg zur Längsachse angeordnet sind.

Dadurch wird beispielsweise der technische Vorteil erreicht, dass durch den Winkel den die jeweiligen Ebenen der umlaufenden Verdickungswulste mit der Längsachse des Fluidschlauchs bilden die dehnstabilisierenden Eigenschaften des Fluidschlauchs wirksam gesteuert werden können. Bei einer orthogonalen Anordnung eines ringförmig ausgebildeten Verdickungswulstes beträgt der Winkel zwischen der Längsachse des Fluidschlauchs und der jeweiligen Ebene in etwa 90°. Sind die Ebenen jedoch schräg zu der Längsachse des Fluidschlauchs angeordnet kann der Winkel zwischen der Längsachse des Fluidschlauchs und der jeweiligen Ebene des umlaufenden Verdickungswulstes beispielweise zwischen 25° und 90° betragen.

In einer vorteilhaften Ausführungsform weist die Schlauchwandung einen einzigen umlaufenden Verdickungswulst auf, welcher Helix-förmig gebildet ist, und wobei der Helix-förmig ausgebildete umlaufende Verdickungswulst mehrmals umlaufend an der Schlauchwandung, insbesondere an einer Innenseite der Schlauchwandung, geformt ist. Dadurch wird beispielsweise der technische Vorteil erreicht, dass ein einziger die Schlauchwandung mehrmals umlaufender Helix-förmig ausgebildeter umlaufender Verdickungswulst eine besonders wirksame Dehnstabilisierung des Fluidschlauchs sicherstellt. Insbesondere kann die Helix des Helix-förmig ausgebildeten umlaufenden Verdickungswulstes eine konstante Ganghöhe aufweisen oder kann die Helix zumindest abschnittsweise unterschiedliche Ganghöhen aufweisen, um zumindest in bestimmten Bereichen unterschiedliche Dehnstabilisationen des Fluidschlauchs bereitzustellen.

In einer vorteilhaften Ausführungsform weist der zumindest eine umlaufende Verdickungswulst einen abgerundeten und/oder eckigen Querschnitt auf.

Dadurch wird beispielsweise der technische Vorteil erreicht, dass durch einen abgerundeten und/oder eckigen Querschnitt des zumindest einen umlaufenden Verdickungswulstes beispielsweise das Strömungsverhalten des Fluids in dem Fluidschlauch vorteilhaft gesteuert werden kann, da an einer abgerundeten Oberfläche das Fluid im Allgemeinen mit einem geringeren Strömungswiderstand vorbeiströmen kann, als bei einer mit Kanten versehenen Oberfläche.

Erfindungsgemäß weist der Fluidschlauch eine Fluideintrittsöffnung und eine Fluidaustrittsöffnung auf, wobei Fluid in dem Fluidschlauch von der Fluideintrittsöffnung zu der Fluidaustrittsöffnung in einer Fluidströmungsrichtung leitbar ist, wobei der umlaufende Verdickungswulst an einer Innenseite der Schlauchwandung geformt ist, wobei der umlaufende Verdickungswulst eine erste Seite aufweist, welche der Fluideintrittsöffnung zugewandt ist, wobei der umlaufende Verdickungswulst eine zweite Seite aufweist, welche der Fluidaustrittsöffnung zugewandt ist, wobei die erste Seite gegenüber der Innenseite in einem ersten Neigungswinkel geneigt ist, wobei die zweite Seite gegenüber der Innenseite in einem zweiten Neigungswinkel geneigt ist, und wobei der erste Neigungswinkel größer als der zweite Neigungswinkel ist.

Dadurch wird beispielsweise der technische Vorteil erreicht, dass durch die Wahl der Größe des Neigungswinkels zwischen der ersten Seite, bzw. zweiten Seite, und der Innenseite der Schlauchwandung, eine besonders vorteilhafte Steuerung des Strömungsverhaltens des Fluids in dem Fluidschlauch ermöglicht wird. Durch den großen ersten Neigungswinkel der ersten Seite des umlaufenden Verdickungswulstes gegenüber der Innenseite der Schlauchwandung, insbesondere in einem Bereich zwischen 110° und 180°, ist die erste Seite gegenüber der Innenwandung besonders flach angeordnet, so dass das Fluid besonders vorteilhaft an der ersten Seite um den umlaufenden Verdickungswulst geleitet werden kann. Der zweite Neigungswinkel der zweiten Seite des umlaufenden Verdickungswulstes ist geringer als der erste Neigungswinkel der ersten Seite. Somit ist die der ersten Seite fluidströmungstechnisch abgewandte zweite Seite gegenüber der Innenseite steiler angeordnet als die erste Seite, um ein wirksames Umströmen des umlaufenden Verdickungswulstes durch das Fluid sicherzustellen.

In einer vorteilhaften Ausführungsform ist der Fluidschlauch als ein formstabiler Formschlauch ausgebildet, wobei der Formschlauch insbesondere einen zweidimensional oder dreidimensional gekrümmten Verlauf aufweist.

Dadurch wird beispielsweise der technische Vorteil erreicht, dass ein Formschlauch besonders vorteilhaft in einer beengten Bauraumsituation, z.B. in einem Motorraum eines Kraftfahrzeuges, verlegt werden kann. Hierbei kann die zweidimensionale oder dreidimensionale Krümmung des Formschlauchs an die geometrischen Beschränkungen in dem Bauraum angepasst werden. Der Formschlauch kann zumindest abschnittsweise elastisch sein, wodurch der Formschlauch beim Einbau partiell aufgebogen werden kann, um einen wirksamen Einbau zu gewährleisten, wobei sich der Formschlauch nach dem Einbau jedoch wieder in die ursprüngliche Form des Formschlauchs zurück verformt, so dass der Formschlauch eine wirksame Formstabilität aufweist.

In einer vorteilhaften Ausführungsform weist der Fluidschlauch zumindest einen Festigkeitsträger auf, wobei der Festigkeitsträger insbesondere aromatische oder aliphatische Polyamid-Fasern, Polyoxadiazol-Fasern, Polyester-Fasern, Aramid-Fasern oder Mischungen davon umfasst.

Dadurch wird beispielsweise der technische Vorteil erreicht, dass der zumindest eine Festigkeitsträger eine besonders wirksame Stabilisierung des Fluidschlauchs sicherstellt, so dass das Fluid auch unter hohem Druck durch den Fluidschlauch geleitet werden kann.

In einer vorteilhaften Ausführungsform weist der Fluidschlauch zumindest eine Zwischenschicht auf, welche jeweils an dem zumindest einen Festigkeitsträger anliegt, und wobei die Zwischenschicht insbesondere Silikonkautschuk umfasst.

Dadurch wird beispielsweise der technische Vorteil erreicht, dass die zumindest eine Zwischenschicht besonders vorteilhaft an dem zumindest einen Festigkeitsträger anliegt, wodurch der jeweilige Festigkeitsträger vor mechanischen Beschädigungen, wie z.B. Abrieb, geschützt werden kann.

In einer vorteilhaften Ausführungsform weist der Fluidschlauch eine innere Sperrschicht auf, welche ausgebildet ist eine Diffusion des Fluids durch die Sperrschicht zu reduzieren, wobei die Sperrschicht an eine Innenseite der Schlauchwandung angrenzt, und wobei der umlaufende Verdickungswulst an der Sperrschicht gebildet ist, und wobei die Sperrschicht insbesondere Fluorkautschuk (FKM), ein thermoplastisches Elastomer (TPE) und/oder ein thermoplastisches Elastomer-Vulkanisat (TPE-V) umfasst.

Dadurch wird beispielsweise der technische Vorteil erreicht, dass eine Sperrschicht eine Diffusion von Fluid wirksam begrenzt, so dass ein wirksames fluidtechnisches Leiten des Fluids durch den Fluidschlauch sichergestellt wird.

In einer vorteilhaften Ausführungsform weist der Fluidschlauch eine Außenschicht auf, wobei die Außenschicht insbesondere chloriertes Polyethylen, chlorsulfoniertes Polyethylen, Acrylnitril-butadien, Polyvinylchlorid, Chloropren, Epichlorhydrin, Epichlorhydrin-Ethylenoxid, Ethylen-Propylendien oder Mischungen davon umfasst.

Dadurch wird beispielsweise der technische Vorteil erreicht, dass die Außenschicht einen besonders wirksamen Schutz des Fluidschlauchs sicherstellt.

Ausführungsbeispiele der Erfindung sind in den Zeichnungen dargestellt und werden im Folgenden näher beschrieben.

Es zeigen:
- Fig. 1: eine perspektivische Ansicht eines Fluidschlauchs;
- Fig. 2: eine perspektivische Ansicht eines Fluidschlauchs mit einem umlaufenden Verdickungswulst an einer Innenseite gemäß einer ersten Ausführungsform;
- Fig. 3A, 3B, 3C: schematische Ansichten von Fluidschläuchen mit umlaufenden Verdickungswulsten gemäß weiteren Ausführungsformen;
- Fig. 4A, 4B: schematische Ansichten von Fluidschläuchen mit umlaufenden Verdickungswulsten gemäß weiteren Ausführungsformen; diese Ausführungsformen entsprechen nicht der Erfindung; und
- Figs. 5A, 5B, 5C: verschiedene schematische Ansichten von Querschnitten von umlaufenden Verdickungswulsten in Fluidschläuchen. Die Figuren
- 5A und 5C: entsprechen nicht der Erfindung.

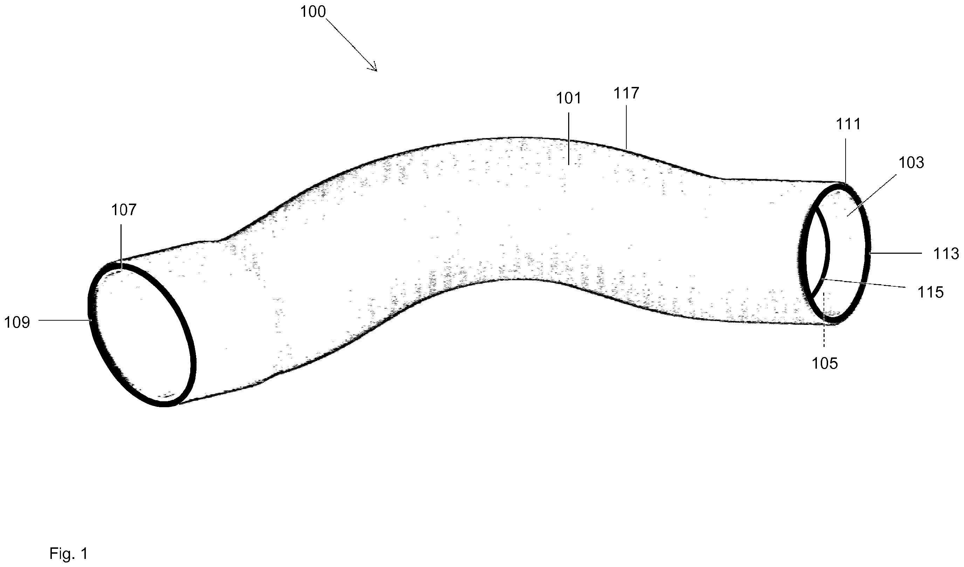

Fig. 1 zeigt eine perspektivische Ansicht eines Fluidschlauchs 100. Der Fluidschlauch 100 umfasst insbesondere eine Ladeluftleitung zum Leiten von Ladeluft oder eine Abgasrückführungsleitung zur Rückführung von Abgas. Um eine vorteilhafte Zufuhr von Ladeluft zu einem Verbrennungsmotor eines Kraftfahrzeuges zu gewährleisten, bzw. um eine wirksame Abführung von Abgas von einem Verbrennungsmotor eines Kraftfahrzeuges zu gewährleisten, muss der Fluidschlauch 100 in dem Motorraum des Kraftfahrzeuges Temperaturen von mehr als 230 °C und einem Druck von mehr als 4 bar widerstehen können. Zudem muss der Fluidschlauch 100 hohen dynamischen Belastungen standhalten, eine hohe Lebensdauer aufweisen, sowie kostengünstig und reproduzierbar herzustellen sein.

Der Fluidschlauch 100 ist hierbei als ein formstabiler Formschlauch ausgebildet, welcher insbesondere einen zweidimensional oder dreidimensional gekrümmten Verlauf aufweist, wodurch der Formschlauch besonders vorteilhaft in einer beengten Bauraumsituation eines Motorraums eines Kraftfahrzeuges verbaut werden kann. Bei der Herstellung eines als Formschlauch ausgebildeten Fluidschlauchs 100 wird ein Schlauchrohling in die gewünschte Form des Formschlauches gebogen. Anschließend wird der Schlauchrohling, z.B. durch Vulkanisation, in der gewünschten Form fixiert, so dass ein formstabiler Formschlauch erhalten wird. Der formstabile Formschlauch weist eine gewisse Flexibilität auf, jedoch kehrt der Formschlauch bei einem Verbiegen oder Verdrehen des Formschlauchs erneut in die ursprüngliche Form zurück.

Der Fluidschlauch 100 weist eine Schlauchwandung 101 mit einer Innenseite 103 auf, wobei die Innenseite 103 einem Innenraum 105 des Fluidschlauchs 100 zugewandt ist. Der Fluidschlauch 100 weist ein erstes Längsende 107 mit einer Fluideintrittsöffnung 109 und weist ein zweites Längsende 111 mit einer Fluidaustrittsöffnung 113 auf. Somit kann Fluid durch die Fluideintrittsöffnung 109 in den Innenraum 105 strömen und aus dem Innenraum 105 durch die Fluidaustrittsöffnung 113 wieder austreten.

Auch wenn dies in Fig. 1 nicht dargestellt ist, kann der Fluidschlauch 100 insbesondere ferner zumindest einen Festigkeitsträger aufweist, wobei der Festigkeitsträger insbesondere aromatische oder aliphatische Polyamid-Fasern, Polyoxadiazol-Fasern, Polyester-Fasern, Aramid-Fasern oder Mischungen davon umfasst. Der Fluidschlauch 100 kann insbesondere zumindest eine Zwischenschicht aufweisen, welche jeweils an dem zumindest einen Festigkeitsträger anliegt, wobei die Zwischenschicht insbesondere Silikonkautschuk umfasst.

Der Fluidschlauch 100 kann ferner insbesondere eine innere Sperrschicht aufweisen, welche ausgebildet ist eine Diffusion des Fluids durch die Sperrschicht zu reduzieren, wobei die Sperrschicht an die Innenseite 103 der Schlauchwandung 101 angrenzt, und wobei die Sperrschicht insbesondere Fluorkautschuk (FKM), ein thermoplastisches Elastomer (TPE) und/oder ein thermoplastisches Elastomer-Vulkanisat (TPE-V) umfasst.

Der Fluidschlauch 100 kann ferner insbesondere eine Außenschicht aufweisen, wobei die Außenschicht insbesondere chloriertes Polyethylen, chlorsulfoniertes Polyethylen, Acrylnitril-butadien, Polyvinylchlorid, Chloropren, Epichlorhydrin, Epichlorhydrin-Ethylenoxid, Ethylen-Propylendien oder Mischungen davon umfasst.

Bei herkömmlich verwendeten Fluidschläuchen 100, insbesondere Ladeluftleitungen und/oder Abgasrückführungsleitungen, kann es bei der Verwendung von bestimmten Motoren von Kraftfahrzeugen bei bestimmten Betriebssituationen zu starken Druckschwankungen in den Fluidschläuchen 100 kommen. Insbesondere kann in dem Fluidschlauch 100 temporär ein Unterdruck auftreten, wodurch der Fluidschlauch 100 unter Umständen temporär kollabieren kann und es zu einem temporären Systemausfall kommen kann.

Um eine ausreichende Stabilität des Fluidschlauchs 100 gemäß der vorliegenden Offenbarung beim Auftreten von Unterdruck in dem Fluidschlauch 100 zu gewährleisten, ist an der Schlauchwandung 101 des Fluidschlauch 100 zumindest ein umlaufender Verdickungswulst 115 angeordnet. Der in Fig. 1 nur schematisch dargestellte umlaufende Verdickungswulst 115 umläuft hierbei insbesondere die Innenseite 103 zumindest abschnittsweise. Alternativ oder zusätzlich kann ein umlaufender Verdickungswulst 115 auch an einer Außenseite 117 der Schlauchwandung 101 angeordnet werden.

Durch den zumindest einen umlaufenden Verdickungswulst 115 wird die Schlauchwandung 101 des Fluidschlauchs 100 stabilisiert, insbesondere wird eine Optimierung der Geometrie der Innenseite 103 ermöglicht, ohne dass zusätzliche Komponenten, wie z.B. eine Stabilisierungsfeder, in dem Fluidschlauch 100 aufgenommen werden müssen. Durch den umlaufenden Verdickungswulst 115 wird das Flächenträgheitsmoment der Innenseite 103 erhöht und die Dehnsteifigkeit des Fluidschlauchs 100 wird erhöht, wodurch die Unterdruckbeständigkeit des Fluidschlauchs 100 erhöht wird.

Durch die einstückige Ausgestaltung des Fluidschlauchs 100 ist die Schlauchwandung 101 einstückig mit dem umlaufenden Verdickungswulst 115 gebildet, wodurch sichergestellt wird, dass sich der umlaufende Verdickungswulst 115 nicht von der Schlauchwandung 101 löst.

Durch das Anordnen des zumindest einen umlaufenden Verdickungswulstes 115 an dem Fluidschlauch 100 bleibt die übrige Rohlingskonstruktion unverändert und kann somit für weitere Anwendungen eingesetzt werden. Bis auf das Anordnen des umlaufenden Verdickungswulstes 115 an dem Fluidschlauch 100 bleibt auch ein Verfahren zum Herstellen des Fluidschlauches 100, bzw. des Formschlauches, unverändert. Der zumindest eine umlaufende Verdickungswulst 115 ermöglicht zudem auch bei geringen Leitungsdurchmessern eine hohe Knickstabilität des Fluidschlauchs 100 und durch eine geeignete Ausgestaltung des umlaufenden Verdickungswulstes 115 kann das Strömungsverhalten des Fluids in dem Fluidschlauch 100 optimiert werden. Somit wird eine Erhöhung der Unterdruckbeständigkeit in Ladeluftleitungen und/oder in Abgasrückführungsleitungen erreicht.

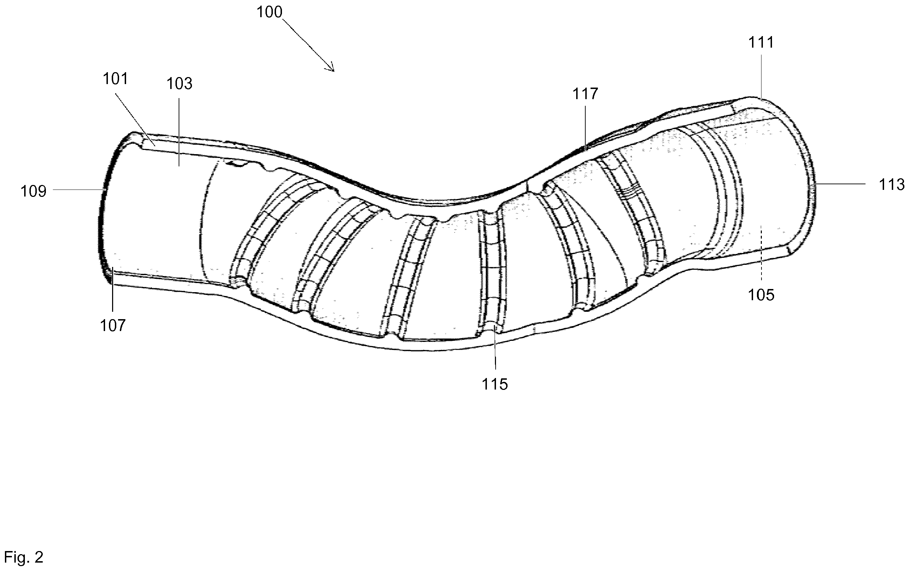

Fig. 2 zeigt eine perspektivische Ansicht eines Fluidschlauchs 100 mit einem umlaufenden Verdickungswulst 115 an einer Innenseite 103 gemäß einer ersten Ausführungsform, wobei der Fluidschlauch 100 insbesondere als eine Ladeluftleitung und/oder als eine Abgasrückführungsleitung ausgebildet ist. In der in Fig. 2 gewählten Darstellung ist eine Schlauchwandung 101 des Fluidschlauchs 100 transparent dargestellt und ist eine einem Innenraum 105 des Fluidschlauchs 100 zugewandte Innenseite 103 der Schlauchwandung 101 hingegen als Fläche dargestellt.

Der Fluidschlauch 100 weist ein erstes Längsende 107 mit einer Fluideintrittsöffnung 109 und weist ein zweites Längsende 111 mit einer Fluidaustrittsöffnung 113 auf. Somit kann Fluid durch die Fluideintrittsöffnung 109 in den Innenraum 105 strömen und aus dem Innenraum 105 durch die Fluidaustrittsöffnung 113 wieder austreten.

An der Innenseite 103 des Fluidschlauchs 100 ist ein umlaufender Verdickungswulst 115 angeordnet, welcher hierbei die Innenseite 103 zumindest abschnittsweise umläuft. In der in Fig. 2 gewählten Ansicht ist nur eine innere Fläche des umlaufenden Verdickungswulstes 115 sichtbar. In der in Fig. 2 dargestellten Ausführungsform weist der Fluidschlauch 100 einen einzigen umlaufenden Verdickungswulst 115 auf, der die Innenseite 103 Helix-förmig umläuft.

Durch die einstückige Ausgestaltung des Fluidschlauchs 100 ist die Schlauchwandung 101 einstückig mit dem umlaufenden Verdickungswulst 115 gebildet, wodurch sichergestellt wird, dass sich der umlaufende Verdickungswulst 115 nicht von der Schlauchwandung 101 löst.

Der Helix-förmige Verdickungswulst 115 erstreckt sich über einen ausgedehnten Bereich der Schlauchwandung 101 und kann dadurch über einen großen Bereich eine besonders gleichmäßige Stabilisierung der Schlauchwandung 101 sicherstellen. Hierbei kann die Helix des Helix-förmig ausgebildeten umlaufenden Verdickungswulstes 115 eine konstante Ganghöhe aufweisen oder kann der Verdickungswulst 115 zumindest abschnittsweise unterschiedliche Ganghöhen aufweisen, um zumindest in bestimmten Bereichen unterschiedliche Dehnstabilisationen des Fluidschlauchs 100 bereitzustellen.

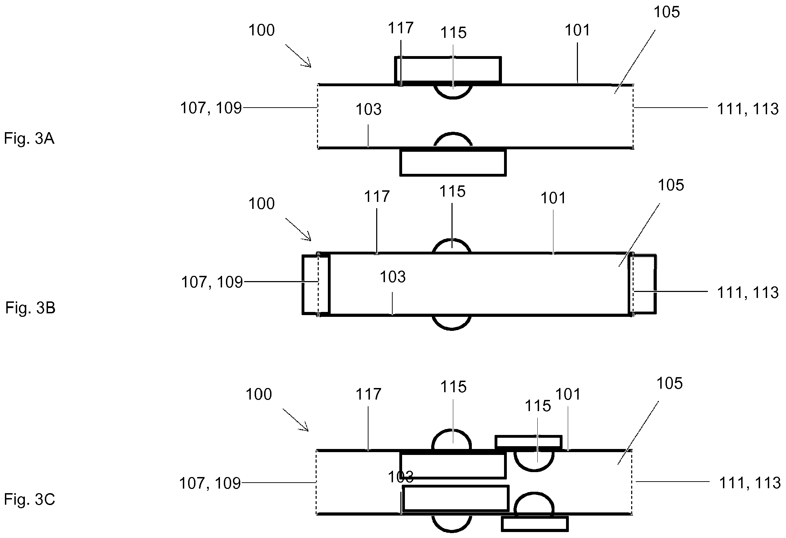

Die Figuren 3A, 3B und 3C zeigen schematische Ansichten von Fluidschläuchen 100 mit umlaufenden Verdickungswulsten 115 gemäß weiteren Ausführungsformen. Die in den Figs. 3A, 3B, und 3C schematisch dargestellten Fluidschläuche 100 weisen jeweils eine Schlauchwandung 101 mit einer Innenseite 103 und einer Außenseite 117 auf. Die jeweiligen Fluidschläuche 100 weisen jeweils ein erstes Längsende 107 mit einer Fluideintrittsöffnung 109 und weisen jeweils ein zweites Längsende 111 mit einer Fluidaustrittsöffnung 113 auf.

In der in Fig. 3A in einem Querschnitt dargestellten Ausführungsform weist die Schlauchwandung 101 einen umlaufenden Verdickungswulst 115 auf, der an der Innenseite 103 der Schlauchwandung 101 geformt ist, und in den Innenraum 105 des Fluidschlauchs 100 hineinragt.

In der in Fig. 3B in einem Querschnitt dargestellten Ausführungsform weist die Schlauchwandung 101 einen umlaufenden Verdickungswulst 115 auf, der an einer Außenseite 117 der Schlauchwandung 101 geformt ist, und nach Außen gerichtet ist.

In der in Fig. 3C in einem Querschnitt dargestellten Ausführungsform weist die Schlauchwandung 101 umlaufenden Verdickungswulste 115 auf, die an einer Außenseite 117 der Schlauchwandung 101 geformt ist, und nach Außen gerichtet sind, und weist die Schlauchwandung 101 zudem umlaufende Verdickungswulste 115 auf, die an einer Innenseite 103 der Schlauchwandung 101 geformt sind und in einen Innenraum 105 des Fluidschlauchs 100 hineinragen.

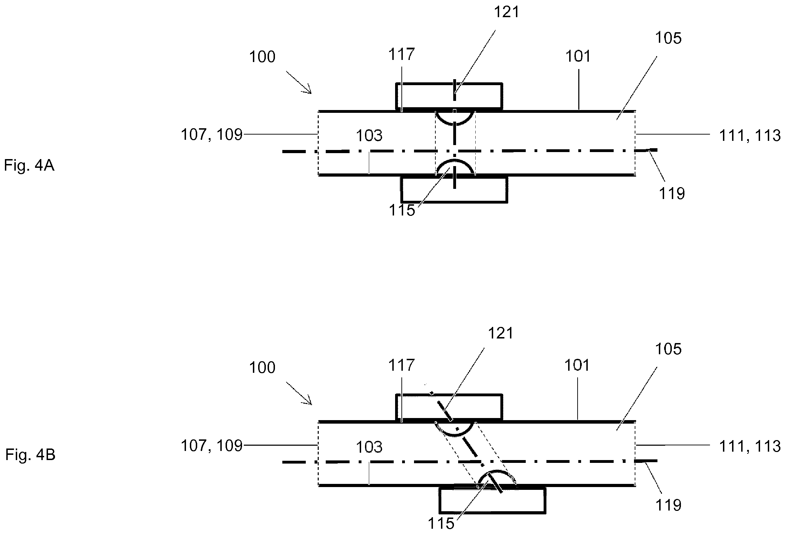

Die Figuren 4A, 4B zeigen schematische Ansichten von Fluidschläuchen 100 mit umlaufenden Verdickungswulsten 115 gemäß weiteren Ausführungsformen. Die in den Figs. 4A und 4B angeordneten die Schlauchwandung 101 umlaufenden Verdickungswulste 115 sind an einer Innenseite 103 der Schlauchwandung 101 angeordnet und ragen in einen Innenraum 105 des Fluidschlauchs 100. Hierbei erstreckt sich eine Längsachse 119 des Fluidschlauchs 100 von einem ersten Längsende 107 des Fluidschlauchs 100 zu einem gegenüberliegenden zweiten Längsende 111 des Fluidschlauchs 100.

In der in Fig. 4A dargestellten Ausführungsform sind die die Schlauchwandung 101 umlaufenden Verdickungswulste 115 in einer Ebene 121 angeordnet, wobei die Ebene 121 orthogonal zur Längsachse 119 angeordnet sind.

In der in Fig. 4B dargestellten Ausführungsform sind die die Schlauchwandung 101 umlaufenden Verdickungswulste 115 in einer Ebene 121 angeordnet, wobei die Ebene 121 schräg zur Längsachse 119 angeordnet sind.

Durch die in Fig. 4A und Fig. 4B dargestellten die Schlauchwandung 101 umlaufenden Verdickungswulste 115 können durch eine unterschiedlich schräge Stellung der Verdickungswulste 115 zu der Längsachse 119 des Fluidschlauchs 100 unterschiedliche vorteilhafte Stabilisierungsmöglichkeiten des Fluidschlauchs 100 sichergestellt werden.

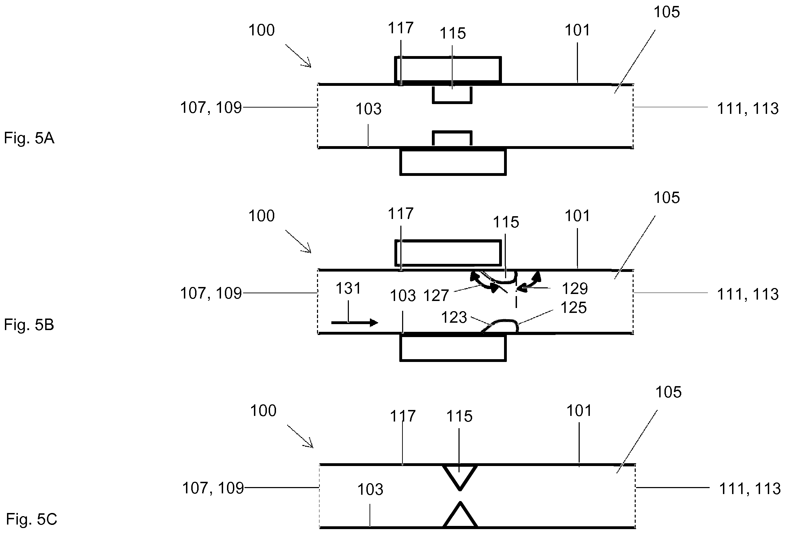

Die Figuren 5A, 5B zeigen verschiedene Ansichten von Querschnitten von umlaufenden Verdickungswulsten 115 in Fluidschläuchen 100. Die in den Figs. 5A und 5B angeordneten die Schlauchwandung 101 umlaufenden Verdickungswulste 115 sind an einer Innenseite 103 der Schlauchwandung 101 angeordnet und ragen in einen Innenraum 105 des Fluidschlauchs 100. Der Fluidschlauch 100 weist an einem ersten Längsende 107 eine Fluideintrittsöffnung 109 und weist an einem zweiten Längsende 111 eine Fluidaustrittsöffnung 113 auf. Somit kann Fluid wirksam von der Fluideintrittsöffnung 109 aus durch den Innenraum 105 des Fluidschlauchs 100 wirksam zu der Fluidaustrittsöffnung 113 strömen.

In den in Fig. 5A und Fig. 5C dargestellten Ausführungsformen weist der umlaufende Verdickungswulst 115 einen eckigen, insbesondere viereckigen, Querschnitt, bzw. einen eckigen, insbesondere dreieckigen, Querschnitt auf. Insbesondere kann der Querschnitt des umlaufenden Verdickungswulstes 115 ferner jeden beliebigen eckigen Querschnitt, wie z.B. einen fünf- oder sechseckigen Querschnitt, umfassen.

In der in Fig. 5B dargestellten Ausführungsform weist der umlaufende Verdickungswulst 115 einen abgerundeten Querschnitt auf. Der umlaufende Verdickungswulst 115 weist hierbei eine erste Seite 123 auf, welche der Fluideintrittsöffnung 109 zugewandt ist, und weist eine zweite Seite 125 auf, welche der Fluidaustrittsöffnung 113 zugewandt ist. Die erste Seite 123 ist gegenüber der Innenseite 103 des Fluidschlauchs 100 in einem ersten Neigungswinkel 127 geneigt. Die zweite Seite 125 ist gegenüber der Innenseite 103 des Fluidschlauchs 100 in einem zweiten Neigungswinkel 129 geneigt. Wie aus der Fig. 5B ersichtlich ist, ist der erste Neigungswinkel 127 größer als der zweite Neigungswinkel 129. Somit kann in einer Fluidströmungsrichtung 131 durch den Fluidschlauch 100 strömendes Fluid an der stark geneigten ersten Seite 123 des umlaufenden Verdickungswulstes 115 mit einem geringen Strömungswiderstand vorbeigeleitet werden, wodurch besonders vorteilhafte Fluid-leitende Eigenschaften des Fluidschlauchs 100 sichergestellt werden können.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidschlauch
- 101: Schlauchwandung
- 103: Innenseite
- 105: Innenraum
- 107: Erstes Längsende
- 109: Fluideintrittsöffnung
- 111: Zweites Längsende
- 113: Fluidaustrittsöffnung
- 115: Umlaufender Verdickungswulst
- 117: Außenseite
- 119: Längsachse
- 121: Ebene des umlaufenden Verdickungswulstes
- 123: Erste Seite des umlaufenden Verdickungswulstes
- 125: Zweite Seite des umlaufenden Verdickungswulstes
- 127: Erster Neigungswinkel
- 129: Zweiter Neigungswinkel
- 131: Fluidströmungsrichtung

## Patentansprüche

1. Einstückiger Fluidschlauch (100) zum Leiten eines Fluids, mit:
einer Schlauchwandung (101), welche zumindest einen umlaufenden Verdickungswulst (115) aufweist, um eine Dehnsteifigkeit des Fluidschlauchs (100) zu erhöhen,
wobei der Fluidschlauch (100) eine Fluideintrittsöffnung (109) und eine Fluidaustrittsöffnung (113) aufweist, wobei Fluid in den Fluidschlauch (100) von der Fluideintrittsöffnung (109) zu der Fluidaustrittsöffnung (113) in einer Fluidströmungsrichtung (131) leitbar ist,
wobei der umlaufende Verdickungswulst (115) an einer Innenseite (103) der Schlauchwandung (101) geformt ist, wobei der umlaufende Verdickungswulst (115) eine erste Seite (123) aufweist, welche der Fluideintrittsöffnung (109) zugewandt ist, wobei der umlaufende Verdickungswulst (115) eine zweite Seite (125) aufweist, welche der Fluidaustrittsöffnung (113) zugewandt ist,
wobei die erste Seite (123) gegenüber der Innenseite (103) in einem ersten Neigungswinkel (127) geneigt ist, wobei die zweite Seite (125) gegenüber der Innenseite (103) in einem zweiten Neigungswinkel (129) geneigt ist,
**dadurch gekennzeichnet, dass** der erste Neigungswinkel (127) größer als der zweite Neigungswinkel (129) ist.

2. Einstückiger Fluidschlauch (100) nach Anspruch 1, wobei der umlaufende Verdickungswulst (115) ringförmig oder Helix-förmig gebildet ist.

3. Einstückiger Fluidschlauch (100) nach einem der vorstehenden Ansprüche, wobei die Schlauchwandung (101) einstückig aus einem Kunststoff oder Polymer, insbesondere aus einem Elastomer, thermoplastischem Elastomer (TPE) und/oder thermoplastischen Elastomer-Vulkanisat (TPE-V) geformt ist.

4. Einstückiger Fluidschlauch (100) nach einem der vorstehenden Ansprüche, wobei der umlaufende Verdickungswulst (115) an einer Außenseite (117) der Schlauchwandung (101) geformt ist und nach Außen gerichtet ist.

5. Einstückiger Fluidschlauch (100) nach einem der vorstehenden Ansprüche, wobei sich der umlaufende Verdickungswulst (115) von einem ersten Längsende (107) des Fluidschlauchs (100) zu einem gegenüberliegenden zweiten Längsende (111) des Fluidschlauchs (100) erstreckt und wobei der umlaufende Verdickungswulst (115) die Schlauchwandung (101) insbesondere mehrmals umläuft.

6. Einstückiger Fluidschlauch (100) nach einem der vorstehenden Ansprüche, wobei die Schlauchwandung (101) eine Vielzahl von umlaufenden Verdickungswulsten (115) aufweist, welche jeweils ringförmig gebildet sind, und wobei die ringförmig ausgebildeten umlaufenden Verdickungswulste (115) voneinander beabstandet an der Schlauchwandung (101), insbesondere an einer Innenseite (103) der Schlauchwandung (101), geformt sind.

7. Einstückiger Fluidschlauch (100) nach Anspruch 6, wobei der Fluidschlauch (100) eine Längsachse (119) aufweist, welche sich von einem ersten Längsende (107) des Fluidschlauchs (100) zu einem gegenüberliegenden zweiten Längsende (111) des Fluidschlauchs (100) erstreckt, wobei die ringförmig ausgebildeten umlaufenden Verdickungswulste (115) jeweils in einer Ebene (121) angeordnet sind, wobei die jeweiligen Ebenen (121) orthogonal und/oder schräg zur Längsachse (119) angeordnet sind.

8. Einstückiger Fluidschlauch (100) nach einem der Ansprüche 1 bis 5, wobei die Schlauchwandung (101) einen einzigen umlaufenden Verdickungswulst (115) aufweist, welcher Helix-förmig gebildet ist, und wobei der Helix-förmig ausgebildete umlaufende Verdickungswulst (115) mehrmals umlaufend an der Schlauchwandung (101), insbesondere an einer Innenseite (103) der Schlauchwandung (101), geformt ist.

9. Einstückiger Fluidschlauch (100) nach einem der vorangehenden Ansprüche, wobei der zumindest eine umlaufende Verdickungswulst (115) einen abgerundeten und/oder eckigen Querschnitt aufweist.

10. Einstückiger Fluidschlauch (100) nach einem der vorangehenden Ansprüche, wobei der Fluidschlauch (100) als ein formstabiler Formschlauch ausgebildet ist, und wobei der Formschlauch insbesondere einen zweidimensional oder dreidimensional gekrümmten Verlauf aufweist.

11. Einstückiger Fluidschlauch (100) nach einem der vorangehenden Ansprüche, wobei der Fluidschlauch (100) zumindest einen Festigkeitsträger aufweist, wobei der Festigkeitsträger insbesondere aromatische oder aliphatische Polyamid-Fasern, Polyoxadiazol-Fasern, Polyester-Fasern, Aramid-Fasern oder Mischungen davon umfasst.

12. Einstückiger Fluidschlauch (100) nach Anspruch 11, wobei der Fluidschlauch (100) zumindest eine Zwischenschicht aufweist, welche jeweils an dem zumindest einen Festigkeitsträger anliegt, und wobei die Zwischenschicht insbesondere Silikonkautschuk umfasst.

13. Einstückiger Fluidschlauch (100) nach einem der vorangehenden Ansprüche, wobei der Fluidschlauch (100) eine innere Sperrschicht aufweist, welche ausgebildet ist eine Diffusion des Fluids durch die Sperrschicht zu reduzieren, wobei die Sperrschicht an eine Innenseite (103) der Schlauchwandung (101) angrenzt, und wobei der umlaufende Verdickungswulst (115) an der Sperrschicht gebildet ist, wobei die Sperrschicht insbesondere Fluorkautschuk (FKM), ein thermoplastisches Elastomer (TPE) und/oder ein thermoplastisches Elastomer-Vulkanisat (TPE-V) umfasst.

14. Einstückiger Fluidschlauch (100) nach einem der vorangehenden Ansprüche, wobei der Fluidschlauch (100) eine Außenschicht aufweist, wobei die Außenschicht insbesondere chloriertes Polyethylen, chlorsulfoniertes Polyethylen, Acrylnitril-butadien, Polyvinylchlorid, Chloropren, Epichlorhydrin, Epichlorhydrin-Ethylenoxid, Ethylen-Propylendien oder Mischungen davon umfasst.

## Claims

1. One-piece fluid hose (100) for conducting a fluid, comprising:
a hose wall (101), which comprises at least one circumferential thickening bulge (115) in order to increase the tensile stiffness of the fluid hose (100),
wherein the fluid hose (100) comprises a fluid inlet opening (109) and a fluid outlet opening (113), wherein fluid is conductable in the fluid hose (100) from the fluid inlet opening (109) to the fluid outlet opening (113) in a fluid flow direction (131),
wherein the circumferential thickening bulge (115) is formed on an inner side (103) of the hose wall (101), wherein the circumferential thickening bulge (115) comprises a first side (123), which faces the fluid inlet opening (109), wherein the circumferential thickening bulge (115) 115) comprises a second side (125), which faces the fluid outlet opening (113),
wherein the first side (123) is inclined in respect to the inside (103) at a first angle of inclination (127), wherein the second side (125) is inclined in respect to the inside (103) at a second angle of inclination (129), **characterized in that**
the first angle of inclination (127) is greater than the second angle of inclination (129),

2. One-piece fluid hose (100) according to claim 1, wherein the circumferential thickening bulge (115) is ring-shaped or helical.

3. One-piece fluid hose (100) according to one of the preceding claims, wherein the hose wall (101) is integrally formed from a plastic or polymer, in particular from an elastomer, thermoplastic elastomer (TPE) and/or thermoplastic elastomer vulcanizate (TPE-V) .

4. One-piece fluid hose (100) according to one of the preceding claims, wherein the circumferential thickening bulge (115) is formed on an outside (117) of the hose wall (101) and is directed outwards.

5. One-piece fluid hose (100) according to one of the preceding claims, wherein the circumferential thickening bulge (115) extends from a first longitudinal end (107) of the fluid hose (100) to an opposite second longitudinal end (111) of the fluid hose (100) and wherein circumferential thickening bulge (115) encircles the hose wall (101) in particular several times.

6. One-piece fluid hose (100) according to any one of the preceding claims, wherein the hose wall (101) has a plurality of circumferential thickening bulges (115), which are each formed in a ring-shape, and wherein the ring-shaped circumferential thickening bulges (115) are spaced apart from each another on the hose wall (101), in particular on an inside (103) of the hose wall (101).

7. One-piece fluid hose (100) according to claim 6, wherein the fluid hose (100) comprises a longitudinal axis (119), which extends from a first longitudinal end (107) of the fluid hose (100) to an opposite second longitudinal end (111) of the fluid hose (100), wherein the ring-shaped circumferential thickening bulges (115) are each arranged in one plane (121), wherein the respective planes (121) are arranged orthogonally and/or obliquely to the longitudinal axis (119).

8. One-piece fluid hose (100) according to one of claims 1 to 5, wherein the hose wall (101) comprises a single circumferential thickening bulge (115), which is formed in a helical shape, and wherein the helical-shaped circumferential thickening bulge (115) is formed on the hose wall (101) by encircling the hose wall (101) for plurality of times, in particular on an inside (103) of the hose wall (101).

9. One-piece fluid hose (100) according to one of the preceding claims, wherein the at least one circumferential thickening bulge (115) has a rounded and/or angular cross section.

10. One-piece fluid hose (100) according to one of the preceding claims, wherein the fluid hose (100) is adapted as a dimensionally stable molded hose, and wherein the dimensionally stable molded hose in particular comprises a two-dimensionally or three-dimensionally curved shape.

11. One-piece fluid hose (100) according to one of the preceding claims, wherein the fluid hose (100) comprises at least one reinforcement, wherein the reinforcement comprises in particular aromatic or aliphatic polyamide fibers, polyoxadiazole fibers, polyester fibers, aramid fibers or mixtures thereof.

12. One-piece fluid hose (100) according to claim 11, wherein the fluid hose (100) comprises at least one intermediate layer, which respectively adheres on the at least one reinforcement, and wherein the intermediate layer comprises in particular silicone rubber.

13. One-piece fluid hose (100) according to one of the preceding claims, wherein the fluid hose (100) has an inner barrier layer, which is adapted to reduce diffusion of the fluid through the barrier layer, wherein the barrier layer is adjacent to an inner side (103) of the hose wall (101), and wherein the circumferential thickening bead (115) is formed on the barrier layer, wherein the barrier layer in particular comprises fluororubber (FKM), a thermoplastic elastomer (TPE) and/or a thermoplastic elastomer vulcanizate (TPE-V).

14. One-piece fluid hose (100) according to one of the preceding claims, wherein the fluid hose (100) comprises an outer layer, wherein the outer layer in particular comprises chlorinated polyethylene, chlorosulfonated polyethylene, acrylonitrile-butadiene, polyvinyl chloride, chloroprene, epichlorohydrin, epichlorohydrin-ethylene oxide, ethylene-propylene diene or mixtures thereof.

## Revendications

1. Tuyau de fluide monobloc (100) destiné à guider un fluide, ledit tuyau comprenant :
une paroi de tuyau (101) qui comporte au moins un bourrelet épaississant circonférentiel (115) destiné à augmenter la rigidité du tuyau de fluide (100),
le tuyau de fluide (100) comportant une ouverture d'entrée de fluide (109) et une ouverture de sortie de fluide (113), le fluide pouvant être guidé jusque dans le tuyau de fluide (100) depuis l'ouverture d'entrée de fluide (109) jusqu'à l'ouverture de sortie de fluide (113) dans une direction d'écoulement de fluide (131),
le bourrelet épaississant circonférentiel (115) étant formé sur un côté intérieur (103) de la paroi de tuyau (101), le bourrelet épaississant circonférentiel (115) comportant un premier côté (123) qui est tourné vers l'ouverture d'entrée de fluide (109), le bourrelet épaississant circonférentiel (115) comportant un deuxième côté (125) qui est tourné vers l'ouverture de sortie de fluide (113),
le premier côté (123) étant incliné par rapport au côté intérieur (103) selon un premier angle d'inclinaison (127), le deuxième côté (125) étant incliné par rapport au côté intérieur (103) selon un deuxième angle d'inclinaison (129),
**caractérisé en ce que** le premier angle d'inclinaison (127) est supérieur au deuxième angle d'inclinaison (129).

2. Tuyau de fluide monobloc (100) selon la revendication 1, le bourrelet épaississant circonférentiel (115) étant de forme annulaire ou hélicoïdale.

3. Tuyau de fluide monobloc (100) selon l'une des revendications précédentes, la paroi de tuyau (101) étant formée d'une seule pièce à partir d'une matière synthétique ou d'un polymère, notamment d'un élastomère, d'un élastomère thermoplastique (TPE) et/ou d'un produit de vulcanisation d'élastomère thermoplastique (TPE-V).

4. Tuyau de fluide monobloc (100) selon l'une des revendications précédentes, le bourrelet épaississant circonférentiel (115) étant formé sur un côté extérieur (117) de la paroi de tuyau (101) et étant dirigé vers l'extérieur.

5. Tuyau de fluide monobloc (100) selon l'une des revendications précédentes, le bourrelet épaississant circonférentiel (115) s'étendant d'une première extrémité longitudinale (107) du tuyau de fluide (100) à une deuxième extrémité longitudinale opposée (111) du tuyau de fluide (100) et le bourrelet épaississant circonférentiel (115) faisant le tour, notamment plusieurs fois, de la paroi de tuyau (101).

6. Tuyau de fluide monobloc (100) selon l'une des revendications précédentes, la paroi de tuyau (101) comportant une pluralité de bourrelets épaississants circonférentiels (115) qui sont chacun formés annulairement, et les bourrelets épaississants circonférentiels annulaires (115) étant espacés les uns des autres sur la paroi de tuyau (101), en particulier sur un côté intérieur (103) de la paroi de tuyau (101).

7. Tuyau de fluide monobloc (100) selon la revendication 6, le tuyau de fluide (100) ayant un axe longitudinal (119) qui s'étend d'une première extrémité longitudinale (107) du tuyau de fluide (100) à une deuxième extrémité longitudinale opposée (111) du tuyau de fluide (100), les bourrelets épaississants circonférentiels annulaires (115) étant chacun disposés dans un plan (121), les plans respectifs (121) étant disposés orthogonalement et/ou obliquement à l'axe longitudinal (119).

8. Tuyau de fluide monobloc (100) selon l'une des revendications 1 à 5, la paroi de tuyau (101) comportant un seul bourrelet épaississant circonférentiel (115) qui est de forme hélicoïdale, et le bourrelet épaississant circonférentiel hélicoïdal (115) faisant plusieurs fois le tour de la paroi de tuyau (101), en particulier sur le côté intérieur (103) de la paroi de tuyau (101).

9. Tuyau de fluide monobloc (100) selon l'une des revendications précédentes, l'au moins un bourrelet épaississant circonférentiel (115) présentant une section transversale arrondie et/ou angulaire.

10. Tuyau de fluide monobloc (100) selon l'une des revendications précédentes, le tuyau de fluide (100) étant conçu comme un tuyau moulé de forme stable et le tuyau moulé présentant en particulier une incurvation bidimensionnelle ou tridimensionnelle.

11. Tuyau de fluide monobloc (100) selon l'une des revendications précédentes, le tuyau de fluide (100) comportant au moins un renfort, le renfort comprenant notamment des fibres de polyamide aromatiques ou aliphatiques, des fibres de polyoxadiazole, des fibres de polyester, des fibres d'aramide ou des mélanges de celles-ci.

12. Tuyau de fluide monobloc (100) selon la revendication 11, le tuyau de fluide (100) comportant au moins une couche intermédiaire qui vient en appui sur au moins un renfort respectif et la couche intermédiaire comprenant notamment du caoutchouc silicone.

13. Tuyau de fluide monobloc (100) selon l'une des revendications précédentes, le tuyau de fluide (100) comportant une couche barrière intérieure qui est conçue pour réduire la diffusion du fluide à travers la couche barrière, la couche barrière étant adjacente au côté intérieur (103) de la paroi de tuyau (101) et le bourrelet épaississant circonférentiel (115) étant formé sur la couche barrière, la couche barrière comprenant notamment du caoutchouc fluoré (FKM), un élastomère thermoplastique (TPE) et/ou un produit de vulcanisation d'élastomère thermoplastique (TPE-V).

14. Tuyau de fluide monobloc (100) selon l'une des revendications précédentes, le tuyau de fluide (100) comportant une couche extérieure, la couche extérieure comprenant notamment du polyéthylène chloré, du polyéthylène chlorosulfoné, de l'acrylonitrile-butadiène, du chlorure de polyvinyle, du chloroprène, de l'épichlorhydrine, de l'épichlorhydrine-oxyde d'éthylène, de l'éthylène-propylène-diène ou des mélanges de ceux-ci.
